# EUROPÄISCHE PATENTSCHRIFT

(11) **EP 1 180 528 B1**
(45) Veröffentlichungstag und Bekanntmachung des Hinweises auf die Patenterteilung: **06.11.2002**
(21) Anmeldenummer: 01117682.3
(22) Anmeldetag: 26.07.2001
(51) Int. Cl.: C08F 8/12

(54) **Verwendung von Vinylalkohol-Mischpolymerisaten als Verdickungsmittel**
Use of a vinyl alcohol copolymer as thickening agent
Usage d'un copolymère d'alcool vinylique comme agent épaississant

(30) Priorität: 17.08.2000 DE 10040178
(43) Veröffentlichungstag der Anmeldung: 20.02.2002
(73) Patentinhaber: Wacker-Chemie GmbH, 81737 München (DE)
(72) Erfinder: Mayer, Theo, Dr., 84387 Julbach (DE); Bauer, Werner, Dr., 84543 Winhöring (DE); Zeh, Harald, Dr., 84489 Burghausen (DE); Kayser, Bernd, Dr., 84489 Burghausen (DE); Bacher, Andreas, Dr., 84489 Burghausen (DE); Dietrich, Ulf, Dr., 84503 Altötting (DE)
(74) Vertreter: Schuderer, Michael, Dr.

(56) Entgegenhaltungen:
- EP-A- 0 220 491
- EP-A- 0 272 012
- EP-A- 0 275 081
- EP-A- 0 477 900
- GB-A- 919 425
- DATABASE WPI Section Ch, Week 7522 Derwent Publications Ltd., London, GB; Class A93, AN 1975-37058W XP002180660 & SU 430 111 A (CEMENT IND. RES. INST.), 7. Januar 1975 (1975-01-07)
- CHEMICAL ABSTRACTS, vol. 88, no. 12, 20. März 1978 (1978-03-20) Columbus, Ohio, US; abstract no. 75032n, Seite 36; Spalte 1; XP002180659 & JP 77 057256 A (DENKI KAGAKU KOGYO K.K.)
- DATABASE WPI Section Ch, Week 8440 Derwent Publications Ltd., London, GB; Class A93, AN 1984-246030 XP002180661 & JP 59 146960 A (HOECHST GOSEI K.K.), 23. August 1984 (1984-08-23)

## Beschreibung

Die Erfindung betrifft Verdickungsmittel auf der Basis von Vinylalkohol-Mischpolymerisaten sowie deren Verwendung, insbesondere in Baustoffmassen.

In der Bauindustrie werden zum Mauern, Verputzen, Spachteln, Kleben und Restaurieren Kalkhydrat- und Zementmischungen eingesetzt. Zur Verbesserung der Verarbeitungseigenschaften und Wasserretentionseigenschaften setzt man den Kalkhydrat- und Zementmischungen wasserlösliche Polymere zu, mit denen sehr gute Verarbeitbarkeit erreicht wird und ein Wasserverlust der Kalkhydrat- und Zementmassen auf stark saugenden Untergründen vor dem Abbinden und damit eine ungenügende Durchhärtung oder Rißbildung der Baumasse verhindert werden soll. Es ist üblich als wasserlösliche Polymere nichtionische Celluloseether wie Methylcellulose (MC), Hydroxyethylcellulose (HEC), Methylhydroxyethylcellulose (MHEC) oder Methylhydroxypropylcellulose (MHPC) zuzusetzen.

Als Celluloseether werden Cellulose-Derivate bezeichnet, die bei Einwirkung von Alkylierungsmitteln wie Ethylenoxid, Dimethylsulfat, Methylchlorid oder Methyliodid auf Cellulose in Gegenwart alkalisch reagierender Verbindungen anfallen. Die technische Herstellung von Methylcellulosen erfolgt ausschließlich durch Umsetzung von Alkalicellulosen mit, toxikologisch nicht unbedenklichem, Methylchlorid in Gegenwart oder Abwesenheit von organischen Lösungsmitteln. Der dabei anfallende Celluloseether enthält daher als Nebenprodukte Methanol, Dimethylether sowie größere Mengen Kochsalz. Insbesondere das zuletzt genannte NaCl kann bei der Anwendung im Baubereich zu Korrosionsproblemen führen, sodaß zu dessen Entfernung aufwendige Reinigungsverfahren eingesetzt werden müssen.

In vielen Anwendungen konkurrieren Celluloseether mit vollsynthetischen Polymeren wie Polyurethan-Assoziativverdickern, Polyacrylaten, Polyiminen und Polyamiden, sowie natürlichen wasserlöslichen Polymeren wie Agar-Agar, Tragant, Carageen, Gummi arabicum, Alginate, Stärke, Gelatine und Casein. Mit Blick auf die Verarbeitungs- und Wasserretentionsanforderungen, insbesondere in zementären Systemen, mit deren hohem pH-Wert und hohem Elektrolytgehalt, gibt es allerdings zu Cellulosether bisher keine Alternative. Nachteilig bei Celluloseethern, insbesondere Hydroxyethyl-Methylcellulose, welche üblicherweise in zementären Bauanwendungen eingesetzt werden, ist allerdings die teilweise erhebliche Verzögerung des Zementabbindens. Polyvinylalkohole sind zwar als Bestandteile von zementären Massen bekannt, aber nur in relativ niedermolekularer Form, in der diese nicht verdickend wirken können. In höhermolekularer Form wäre zwar die verdickende Wirkung besser, problematisch ist dann aber die geringe Kaltwasserlöslichkeit und die damit einhergehenden schlechten Verarbeitungseigenschaften.

Aus der US-A 5565027 sind mit Hydroxyaldehyden modifizierte Polyvinylalkohole bekannt, welche als Zementverflüssiger in zementären Systemen eingesetzt werden. Die EP-A 272012 beschreibt die Verwendung von Vinylalkohol-Copolymeren als Verdickungsmittel in wässrigen Systemen, beispielsweise Dispersionsfarben, wobei die Copolymeren neben Vinylalkohol-Einheiten noch Acrylsäureester-Einheiten mit mindestens zwei Ethylenoxideinheiten im Esterrest enthalten. In der JP-A 10/087937 wird die Verbesserung der mechanischen Festigkeit von zementhaltigen Baustoffen durch Zugabe von Polyvinylalkohol oder Vinylalkohol-Copolymeren mit definierter Löslichkeit in wässriger Ca(OH)₂-Lösung beschrieben. Die Vinylalkoholcopolymere enthalten Carboxyl-, Sulfonat- und N-Vinyl-Einheiten.

In der JP-A 08/319395 wird die Verwendung einer Zusammensetzung aus Alkaliacetat-Salz und einem Vinylalkohol-Copolymer mit Acetylaceton-Einheiten als Verdickungsmittel für Polymeremulsionen beschrieben. Die JP-A 08/269132 beschreibt feinteilige, pulverförmige Vinylalkohol-Homo- oder -Copolymerisate mit definiertem Anteil an syndiotaktischer, anstelle der üblichen ataktischen, Konformation zur Verbesserung der Wasserbeständigkeit von damit modifizierten Zusammensetzungen. Aus der JP-B 54-27382 ist ein Verfahren zur Verdickung von Copolymerdispersionen auf Basis von carboxylfunktionellen Copolymerisaten bekannt, wobei teilverseifter Polyvinylalkohol zugegeben wird. In der EP-A 458328 wird ein Verdickersystem für wasserhaltige Baustoffe beschrieben, welches aus einer Kombination aus Celluloseether, Polyvinylalkohol und Borax besteht, und dessen Wirkung auf der Komplexbildung zwischen Polyvinylalkohol und Borax basiert.

Der Erfindung lag die Aufgabe zugrunde, ein vollsynthetisches wasserlösliches Polymer zur Verfügung zu stellen, das in bautechnischen, insbesondere auch zementären, Formulierungen als Verdickungsmittel wirkt und hervorragende Verarbeitungs- und mechanische Eigenschaften erzeugt, ohne die obengenannten Nachteile aufzuweisen.

Gegenstand der Erfindung ist die Verwendung von Mischpolymerisaten auf der Basis von vollverseiften oder teilverseiften Vinylalkohol-Mischpolymerisaten, erhältlich durch Verseifung von Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁- bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen, und ggf. Hilfsmonomere aus der Gruppe umfassend ethylenisch ungesättigte Mono- und Dicarbonsäuren, ethylenisch ungesättigte Carbonsäureamide und nitrile, ethylenisch ungesättigte Carbonsäureanhydride, mit einem Molekulargewicht Mw > 100000, und in Form deren wässrigen Lösung oder in Pulverform, als Verdickungsmittel.

Bevorzugter 1-Alkylvinylester ist Isopropenylacetat. Bevorzugte Vinylester von alpha-verzweigten Carbonsäuren sind solche von alpha-verzweigten Carbonsäuren mit 9 bis 11 C-Atomen; besonders bevorzugt werden Vinylester von alpha-verzweigten Carbonsäuren mit 10 C-Atomen (VeoVa10, Handelsname der Fa. Shell). Bevorzugte Acrylsäure- und Methacrylsäureester sind solche von C₁- bis C₁₀-Alkoholen; besonders bevorzugt werden Methylacrylat, Ethylacrylat, Butylacrylat, 2-Ethylhexylacrylat und Methylmethacrylat und 2-Ethylhexylmethacrylat. Gegebenenfalls können noch 0.05 bis 2 Gew.-%, bezogen auf das Gesamtgewicht des Monomergemisches, Hilfsmonomere copolymerisiert werden, die aus der Gruppe ausgewählt werden umfassend ethylenisch ungesättigte Mono- und Dicarbonsäuren, vorzugsweise Acrylsäure, Methacrylsäure, Fumarsäure, Crotonsäure und Maleinsäure; ethylenisch ungesättigte Carbonsäureamide und -nitrile, vorzugsweise Acrylamid und Acrylnitril und ethylenisch ungesättigte Carbonsäureanhydride, vorzugsweise Maleinsäureanhydrid.

Im allgemeinen beträgt der Hydrolysegrad der teilverseiften oder vollverseiften Vinylalkohol-Mischpolymerisate 75 bis 100 Mol-%. Bei vollverseiften Vinylalkohol-Mischpolymerisaten vorzugsweise von 97.5 bis 100 Mol-%, besonders bevorzugt von 98 bis 99.5 Mol-%. Bei teilverseiften Vinylalkohol-Mischpolymerisaten vorzugsweise von 80 bis 95 Mol-%, besonders bevorzugt von 86 bis 90 Mol-%. Der Anteil der genannten Comonomer-Einheiten beträgt 0.1 bis 50 Gew.-%, vorzugsweise 0.3 bis 15 Gew.-%, besonders bevorzugt 0.5 bis 6 Gew.-%, jeweils bezogen auf das Gesamtgewicht des Vinylalkohol-Mischpolymerisats.

Besonders bevorzugt werden Vinylalkohol-Mischpolymerisate erhältlich durch Verseifung von Vinylacetat-Mischpolymerisaten mit jeweils 0.3 bis 15 Gew.-% Isopropenylacetat oder Vinylestern von alpha-verzweigten Carbonsäuren mit 9 bis 11 C-Atomen, oder Methyl-, Ethyl-, Butyl-, 2-Ethylhexylacrylat und 2-Ethylhexylmethacrylat und Methylmethacrylat. Besonders bevorzugt werden auch solche mit 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen. Schließlich werden noch besonders bevorzugt Vinylalkohol-Mischpolymerisate mit 0.5 bis 6 Gew.-% Isopropenylacetat und 0.5 bis 6 Gew.-% Vinylestern von alpha-verzweigten Carbonsäuren mit 10 C-Atomen (VeoVa10) und 0.5 bis 6 Gew.-% Methylacrylat; sowie Vinylalkohol-Mischpolymerisate mit 0.5 bis 6 Gew.-% Isopropenylacetat und 0.5 bis 6 Gew.-% 2-Ethylhexylmethacrylat und 0.5 bis 6 Gew.-% Methylacrylat.

Die Herstellung der Vinylalkohol-Mischpolymerisate kann mittels bekannter Verfahren wie Substanz-, Lösungs-, Suspensions-oder Emulsionspolymerisation erfolgen. Die Lösungspolymerisation erfolgt vorzugsweise in alkoholischer Lösung, beispielsweise in Methanol, Ethanol und Isopropanol. Suspensions- und Emulsionspolymerisation werden in wässrigem Medium durchgeführt. Die Polymerisation wird bei einer Temperatur von vorzugsweise 5°C bis 90°C durchgeführt und durch Zugabe von, für das jeweilige Polymerisationsverfahren üblichen, Initiatoren radikalisch initiiert. Die Vinylalkohol-Einheiten werden durch Copolymerisation von Vinylacetat in das Copolymere eingeführt, wobei die Acetatreste, genauso wie die weiteren verseifbaren Monomereinheiten, in einem nachfolgenden Hydrolyseschritt verseift werden. Die Einstellung des Molekulargewichtes kann in bekannter Weise durch Zugabe von Regler, durch den Lösungsmittelgehalt, durch Variation der Initiatorkonzentration und durch Variation der Temperatur erfolgen. Nach Abschluß der Polymerisation wird gegebenenfalls Lösungsmittel abdestilliert oder das Polymer durch Filtration aus der wässrigen Phase isoliert.

Die Verseifung erfolgt in an sich bekannter Weise im Alkalischen oder Sauren unter Zugabe von Base oder Säure. Vorzugsweise wird das zu verseifende Vinylacetat-Copolymer in Alkohol, beispielsweise Methanol, unter Einstellen eines Feststoffgehalts von 5 bis 50 % aufgenommen. Bevorzugt wird die Hydrolyse im Basischen durchgeführt, beispielsweise durch Zugabe von NaOH, KOH oder NaHCO₃. Das erhaltene Vinylalkohol-Mischpolymerisat kann aus dem Reaktionsgemisch durch Filtration oder Destillation des Lösungsmittelgemisches isoliert werden. Das filtrierte Produkt wird anschließend mit üblichen Methoden getrocknet und gemahlen.

Außerdem kann durch Zugabe von Wasser, vorteilhaft in Form von überhitztem Wasserdampf, während der Destillation der organischen Lösungsmittel eine wässrige Lösung erhalten werden. Für die Aufarbeitung einer wässrigen Lösung werden die Sprühtrocknung und die Ausfällung des Vinylalkohol-Mischpolymerisats, beispielsweise mit Methanol, bevorzugt. Anschließend wird mit einem Trocknungs- und Mahlschritt aufgearbeitet. Im allgemeinen wird bis zum Erhalt einer mittleren Korngröße von < 1 mm, vorzugsweise < 200 µm gemahlen.

Das Verdickungsmittel kann als wässrige Lösung oder in Pulverform, oder als Additiv in wässrigen Polymerdispersionen oder in Wasser redispergierbaren Polymerpulvern eingesetzt werden. Es kann allein oder im Gemisch mit weiteren Rheologieadditiven eingesetzt werden. Im allgemeinen wird das Verdickungsmittel in einer Menge von 0.01 bis 20 Gew.-% Verdickungsmittel (fest), bezogen auf das Gesamtgewicht der zu verdickenden Zusammensetzung, eingesetzt. Das mischpolymer wird auf allen Gebieten, in denen rheologische Hilfsmittel eingesetzt werden, als Verdickungsmittel verwendet.

Beispielsweise als Verdickungsmittel in Kosmetika, im pharmazeutischen Bereich, in wasserbasierenden Siliconemulsionen oder in Siliconölen, in Beschichtungsmittel-Zusammensetzungen wie Dispersionsfarben oder Textilbeschichtungen, als Verdickungsmittel in Klebstoff-Zusammensetzungen, und als Verdickungsmittel in Bauanwendungen sowohl in hydraulisch abbindenden als auch nicht hydraulisch abbindenden Zusammensetzungen wie Beton, Zementmörtel, Kalkmörtel, Gipsmörtel. Möglich sind auch Anwendungen in wasserhaltigen Rezepturen in denen auch Celluloseether und Stärkeether als Verdickungsmittel eingesetzt werden. Besonders bevorzugt sind die Bauanwendungen. Ganz besonders bevorzugt sind zementäre Bauanwendungen wie zementäre Baukleber (Fliesenkleber), zementäre Trockenmörtel, zementäre Verlaufsmassen, zementäre Putze, zementäre Vollwärmeschutzkleber, zementäre Dichtungsschlämmen.

Typische Rezepturen für zementäre Baukleber enthalten 5 bis 80 Gew.-% Zement, 5 bis 80 Gew.-% Füllstoffe wie Quarzsand, Calciumcarbonat oder Talkum, 0.5 bis 60 Gew.-% Polymerdispersion oder Polymerpulver, sowie 0.1 bis 5 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angerührt.
Die Verdickungsmittel eignen sich auch zur Verwendung in zementfreien Baurezepturen, beispielsweise mit der entsprechenden Menge Gips oder Wasserglas als anorganischem Bindemittel; vorzugsweise in gipshaltigen Zusammensetzungen wie Gipsputzen und Gipsspachtelmassen. Die zementfreien Rezepturen finden vor allem in Spachtelmassen, Fliesenklebern, Vollwärmeschutzklebern, Putzen und Farben Verwendung. Typische Rezepturen für Gipsformulierungen enthalten 15 bis 96 Gew.-% Gips, 3 bis 80 Gew.-% Füllstoffe wie Quarzsand, Calciumcarbonat oder Talkum, 0 bis 5 Gew.-% Kalkhydrat, 0 bis 5 Gew.-% Polymerdispersion oder Polymerpulver, sowie 0.01 bis 3 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%.

In zementären Baumassen, beispielsweise Fliesenkleber, werden mit den erfindungsgemäßen Verdickungsmitteln auch ohne zusätzliche rheologische Additive, wie Methylhydroxyethylcellulose, hervorragende Verarbeitungs- und mechanische Eigenschaften der zementären Masse gefunden. Celluloseether konnten bisher in zementären Bauformulierungen nur teilweise, und unter erheblichem technischen Qualitätsverlust der Baumasse, beispielsweise durch Stärkeverdicker oder wasserlösliche Polyacrylate substituiert werden. Mit dem erfindungsgemäßen Verdickungsmittel können Celluloseether ohne Qualitätseinbußen in der zementären Anwendung bis zu 100 % ersetzt werden.

Die nachfolgenden Beispiele dienen zur weiteren Erläuterung der Erfindung.

### Beispiel 1:

In einer thermostatisierten Laborapparatur mit 2.5 Liter Füllvolumen wurden unter Stickstoff 612 g Wasser, 61.2 mg Kupfer-(II)-Acetat und 61.2 g einer 5 %-igen Polyvinylpyrrolidon-Lösung (PVP-K90) in Wasser vorgelegt. Unter Rühren wurde eine Lösung von 620 mg t-Butyl-per-2-ethyl-hexanoat (TBPEH), 322 mg t-Butyl-per-neodecanoat (TBPND) und 6.12 g VeoVa10 in 612 g Vinylacetat zugeführt. Der Reaktor wurde auf 51.5°C aufgeheizt, nach Abflauen der Reaktion wurde stufenweise auf 75°C aufgeheizt. Es wurde noch 2 Stunden bei dieser Temperatur gehalten, dann abgekühlt. Die entstandenen Polymer-Perlen wurden abgesaugt, gut mit Wasser gewaschen und getrocknet.
In einem Laborreaktor mit 2.5 Liter Inhalt wurden 90 g der Polymer-Perlen in 810 g Methanol bei 50°C gelöst. Die Lösung wurde auf 30°C abgekühlt, bei stehendem Rührer mit 500 g Methanol überschichtet und sofort mit methanolischer NaOH versetzt (10 g NaOH (46 %-ig in Wasser) gelöst in 90 g Methanol) und der Rührer eingeschaltet. Die Lösung wurde zunehmend trüber. Während der Gelphase wurde der Rührer auf höhere Drehzahl gestellt, um das Gel zu zerkleinern. Nach der Gelphase wurde die Reaktion noch 2 Stunden weitergeführt, mit Essigsäure neutralisiert und der gebildete Feststoff abfiltriert, gewaschen und getrocknet.
Es wurde ein Vinylacetat-VeoVa10-Copolymer erhalten, mit einem Hydrolysegrad von 99.5 % und einem Molekulargewicht Mw von > 100000.

### Beispiel 2:

Es wurde analog Beispiel 1 vorgegangen, jedoch statt 6.12 g VeoVa 10 wurden 18.4 g Isopropenylacetat im Vinylacetat gelöst.
Die Aufarbeitung wurde analog Beispiel 1 durchgeführt. Es wurde ein Vinylacetat-Isopropenylacetat-Copolymer erhalten, mit einem Hydrolysegrad von 99.2 % und einem Molekulargewicht Mw von > 100000.

### Beispiel 3:

Beispiel 2 wurde wiederholt, jedoch wurden 33.7 g Isopropenylacetat im Vinylacetat gelöst.
Die Aufarbeitung wurde analog Beispiel 1 durchgeführt. Es wurde ein Vinylacetat-Isopropenylacetat-Copolymer erhalten, mit einem Hydrolysegrad von 99.7 % und einem Molekulargewicht Mw von > 100000.

### Beispiel 4:

Beispiel 1 wurde wiederholt, jedoch wurden zusätzlich zu den 6.12 g VeoVa 10 noch 18.4 g Isopropenylacetat im Vinylacetat gelöst.
Die Aufarbeitung wurde analog Beispiel 1 durchgeführt. Es wurde ein Vinylacetat-VeoVa10-Isopropenylacetat-Copolymer erhalten, mit einem Hydrolysegrad von 99.6 % und einem Molekulargewicht Mw von > 100000.

### Beispiel 5:

Beispiel 1 wurde wiederholt, jedoch wurden zusätzlich zu den 6.12 g VeoVa 10 noch 30.6 g Isopropenylacetat im Vinylacetat gelöst.
Die Aufarbeitung wurde analog Beispiel 1 durchgeführt. Es wurde ein Vinylacetat-VeoVa10-Isopropenylacetat-Copolymer erhalten, mit einem Hydrolysegrad von 99.4 % und einem Molekulargewicht Mw von > 100000.

### Beispiel 6:

In einer thermostatisierten Laborapparatur mit 2.5 Liter Füllvolumen wurden unter Stickstoff 900 g Wasser, 90.0 mg Kupfer-(II)-Acetat und 90.0 g einer 5 %-igen Polyvinylpyrrolidon-Lösung (PVP-K90) in Wasser vorgelegt. Unter Rühren wurde eine Lösung von 909 mg t-Butyl-per-2-ethyl-hexanoat (TBPEH), 600 mg t-Butyl-per-pivalat (PPV), 27.0 g Isopropenylacetat, 9.0 g Methylacrylat und 9.0 g VeoVa10 in 900 g Vinylacetat zugegeben. Der Reaktor wurde auf 56°C aufgeheizt, nach Abflauen der Reaktion wurde stufenweise auf 70°C aufgeheizt. Es wurde noch 2 Stunden bei dieser Temperatur gehalten, dann abgekühlt. Die entstandenen Perlen wurden abgesaugt, gut mit Wasser gewaschen und getrocknet.
In einem Laborreaktor mit 2.5 Liter Inhalt wurden anschließend 90 g der Polymer-Perlen in 810 g Methanol bei 50°C gelöst. Die Lösung wurde auf 30°C abgekühlt, bei stehendem Rührer mit 500 g Methanol überschichtet und sofort mit methanolischer NaOH versetzt (10 g NaOH (46 %-ig in Wasser) in 90 g Methanol) und der Rührer eingeschaltet.
Die Lösung wurde zunehmend trüber. Während der Gelphase wurde der Rührer auf höhere Drehzahl gestellt, um das Gel zu zerkleinern. Nach der Gelphase wurde die Reaktion noch 2 Stunden weitergeführt, mit Essigsäure neutralisiert und der gebildete Feststoff abfiltriert, gewaschen und getrocknet.
Es wurde ein Vinylacetat-VeoVa10-Methylacrylat-Isopropenylacetat-Copolymer erhalten, mit einem Hydrolysegrad von 99.5 % und einem Molekulargewicht Mw von > 100000.

### Beispiel 7:

Beispiel 6 wurde wiederholt, jedoch wurden 18 g Methylacrylat im Vinylacetat zugegeben.
Die Aufarbeitung wurde analog Beispiel 6 durchgeführt. Es wurde ein Vinylacetat-VeoVa10-Methylacrylat-Isopropenylacetat-Copolymer erhalten, mit einem Hydrolysegrad von 99.4 % und einem Molekulargewicht Mw von > 100000.

### Beispiel 8:

Es wurde eine Reaktion mit der Zusammensetzung analog Beispiel 7 durchgeführt wobei Vinylacetat, in einer Menge von 821 g, vorgelegt wurde.
Der Reaktor wurde auf 62°C aufgeheizt, und nach Reaktionsstart wurden 19 g Methylacrylat, gelöst in 74 g Vinylacetat, langsam zugetropft. Nach Abflauen der Reaktion wurde stufenweise auf 70°C aufgeheizt. Es wurde noch 2 Stunden bei dieser Temperatur gehalten, dann abgekühlt.
Die entstandenen Perlen wurden abgesaugt, gut mit Wasser gewaschen und getrocknet.
Die weitere Aufarbeitung wurde analog Beispiel 1 durchgeführt. Es wurde ein Vinylacetat-VeoVa10-Isopropenylacetat-Methylacrylat-Copolymer erhalten, mit einem Hydrolysegrad von 99.9 % und einem Molekulargewicht Mw von > 100000.

### Vergleichsbeispiel 9:

Handelsübliche Hydroxyethyl-Methylcellulose mit einer Höppler-Viskosität von 6000 mPas (2 %-ige Lösung in Wasser)

### Vergleichsbeispiel 10:

Handelsübliche Hydroxyethyl-Methylcellulose mit einer Höppler-Viskosität von 40000 mPas (2 %-ige Lösung in Wasser)

### Vergleichsbeispiel 11:

Handelsübliche Hydroxyethyl-Methylcellulose mit einer Höppler-Viskosität von 15000 mPas (2 %-ige Lösung in Wasser)

### Vergleichsbeispiel 12:

Handelsüblicher, vollverseifter Polyvinylalkohol mit einem Hydrolysegrad von 99.5 Mol-% und einem Molekulargewicht Mw von > 200000.

### Beispiel 13:

Beispiel 2 wurde wiederholt, jedoch wurde anstelle von VeoVa10 die gleiche Menge 2-Ethylhexlmethacrylat copolymerisiert. Die Aufarbeitung wurde analog Beispiel 1 durchgeführt. Es wurde ein Vinylacetat-2-Ethylhexylmethacrylat-Copolymer erhalten, mit einem Hydrolysegrad von 99.6 % und einem Molekulargewicht Mw von > 100000.

### Testung der Verdickungsmittel:

Die Prüfung der Verdickungsmittel wurde in folgender Formulierung durchgeführt:
55.2 Gew.-Teile Quarzsand Nr.9a (0.1-0.4 mm),
43.0 Gew.-Teile Zement 42.5 (Rohrdorfer),
1.5 Gew.-Teile Redispersionspulver (Vinnapas RE 530 Z),
0.7 Gew.-Teile Verdickungsmittel,

Die Trockenmischung wurde mit der in der Tabelle 1 angegebenen Menge Wasser versetzt, die Mischung 5 Minuten stehen gelassen und danach der Prüfung unterzogen.

### Testmethoden:

Die Testergebnisse sind in Tabelle 1 zusammengefaßt.

### Bestimmung der Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Bestimmung der Benetzung:

Zur Bestimmung der Benetzung wurde die Formulierung mit einer Zahntraufel auf eine Faserzementplatte aufgetragen, und die Benetzung der Platte qualitativ beurteilt. Die Bewertung erfolgte in einer Notenskala von 1 bis 6, wobei die Note 1 das Optimum darstellt.

### Bestimmung der Stegausbildung:

Die Formulierung wurde mit einer Zahntraufel auf eine Faserzementplatte aufgetragen, und die Qualität der dabei gebildeten Stege qualitativ beurteilt. Die Bewertung erfolgte in einer Notenskala von 1 bis 6, wobei die Note 1 das Optimum darstellt.

### Bestimmung der Wasserretention:

Die Bestimmung der Wasserretention wurde nach DIN 18555 Teil 7 vorgenommen. In Tabelle 1 ist der in der Formulierung verbliebene Wasseranteil angegeben.

### Bestimmung des Aufbruchs:

Die Fliesenkleberformulierung wurde auf eine Faserzementplatte appliziert und nach 10 Minuten eine Fliese (5 cm x 5 cm) aufgelegt, welche für 30 Sekunden mit einem Gewicht von 2 kg belastet wurde. Nach weiteren 60 Minuten wurde die Fliese abgenommen, und es wurde ermittelt zu welchem Prozentsatz die Fliesenrückseite noch mit Kleber behaftet ist.

### Bestimmung der Standfestigkeit (Abrutschtest):

Zum Abrutschtest wurde eine Fliese (15 x 15 cm) in die Fliesenkleberformulierung eingelegt, mit 5 kg Gewicht für 30 Sekunden belastet, und der Probenaufbau senkrecht gestellt. Anschließend wurde die Oberkante der Fliese für jeweils 30 Sekunden mit Gewichten belastet und festgestellt, bei welchem Gewicht die Fliese abrutscht.

### Bestimmung des Zementabbindeverhaltens:

Das Zementabbindeverhalten wurde in der Fliesenkleberformulierung mit einem Thermofühler bestimmt. Es wurde die Zeit bis zum Einsetzen des Abbindens bestimmt und relativ zu einer Verdickungsmittel-freien Formulierung das Verzögern (Werte > 100) bzw. das Beschleunigen des Abbindens (Werte < 100) bestimmt.

### Diskussion der Meßergebnisse:

Die Testergebnisse zeigen, daß das Verdickungsmittel auf Basis der Vinylalkohol-Mischpolymerisate (Beispiele 1 bis 8, 13) gegenüber herkömmlichem Polyvinylalkohol (Vergleichsbeispiel 12) eine deutlich bessere Verarbeitbarkeit (Geschmeidigkeit, Benetzung, Stegausbildung) aufweist, und eine wesentlich bessere verdickende Wirkung (Aufbruch, Wasserretention, Standfestigkeit).
Gegenüber herkömmlichen Verdickungsmittel auf Basis von Celluloseethern (Vergleichsbeispiele 9 bis 11) zeichnet sich das Vinylalkohol-Mischpolymerisat durch deutlich beschleunigtes Abbindeverhalten (Zementabbindung) aus.

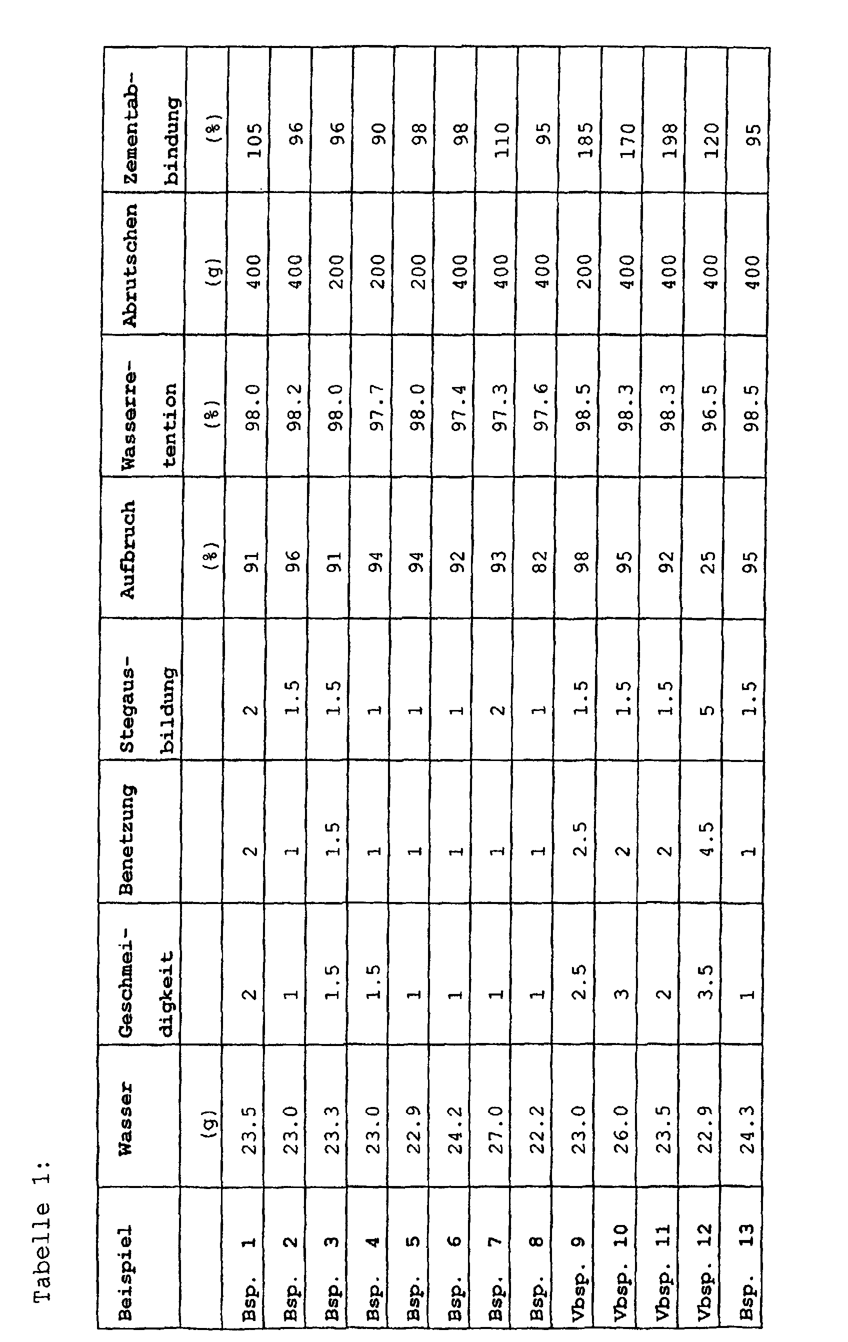

Die Testung der Verdickungsmittel in gipshaltigen Rezepturen (Gipsputzen) wurde in folgender Formulierung durchgeführt:

| | |
|---|---|
| Gips (Primoplast - Hilliges Gipswerk) | 700 g |
| Quarzsand (Nr.7; 0,2 - 0,7mm) | 237.6 g |
| Leichtfüllstoff Perlite (3 mm) | 25 g |
| Kalkhydrat (Walhalla) | 35 g |
| Verzögerer (Retardan, Aminobutyraldehyd-Kondensat) | 0.4 g |
| Verdickungsmittel | 2 g |

### Testmethoden:

Die Testergebnisse sind in Tabelle 2 zusammengefaßt.

### Bestimmung des Luftporengehalts:

Die Bestimmung des Luftporengehalts wurde nach DIN 18555 Teil 2 vorgenommen.

### Bestimmung der Wasserretention:

Die Bestimmung der Wasserretention wurde nach DIN 18555 Teil 7 vorgenommen.

### Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Standfestigkeit:

Die Standfestigkeit der Formulierung wurde qualitativ beim Durchfahren der Mischung mit einer Kelle beurteilt. Die Bewertung erfolgte in einer Notenskala von 1 bis 6, wobei die Note 1 das Optimum darstellt.

### Nachdicken:

Nach einer Rastzeit von 5 Minuten wurde qualitativ das Nachdicken der Formulierung beurteilt. Die Bewertung erfolgte in einer Notenskala von 1 bis 6, wobei die Note 1 das Optimum darstellt.

### Erstarrungsbeginn (EB), Erstarrungsende (EE):

Die Zeit bis zum beginnenden Erstarren wurde mittels einer in die Formulierung wiederholt eintauchende Nadel bestimmt. Der Erstarrungsbeginn ist der Zeitpunkt, ab dem mit gleichem Kraftaufwand die Eintauchtiefe der Nadel geringer war. Nach dem Erstarrungsende war ein Eintauchen mit gleichem Kraftaufwand nicht mehr möglich.

### Filzzeit:

Die Formulierung wurde mit einer Kelle auf eine Ziegelwand aufgetragen und nach einer Wartezeit mit einer Holzlatte abgezogen. Anschließend wurde der Putz mit einem angefeuchteten Schwamm gefilzt. Die Filzzeit ist diejenige Zeit, ab der mit dem Filzen begonnen werden kann ohne dass der Putz aufreißt (gemessen ab dem Auftragen der Formulierung).

### Ausbreitmaß:

Die Formulierung wird in einen Setztrichter auf einem Ausbreittisch nach DIN 1060 Teil 3 eingefüllt und das Ausbreitmaß der Mischung 1 Minute nach Entfernen des Trichters sowie nach Rütteln der Probe mit 15 Schlägen gemessen.

### Schwinden:

Von der Mischung werden Probekörper angefertigt und mittels eines Messgerätes nach DIN 52450 die Längenänderung der Prismen in der Längsachse nach 28 Tagen ermittelt.

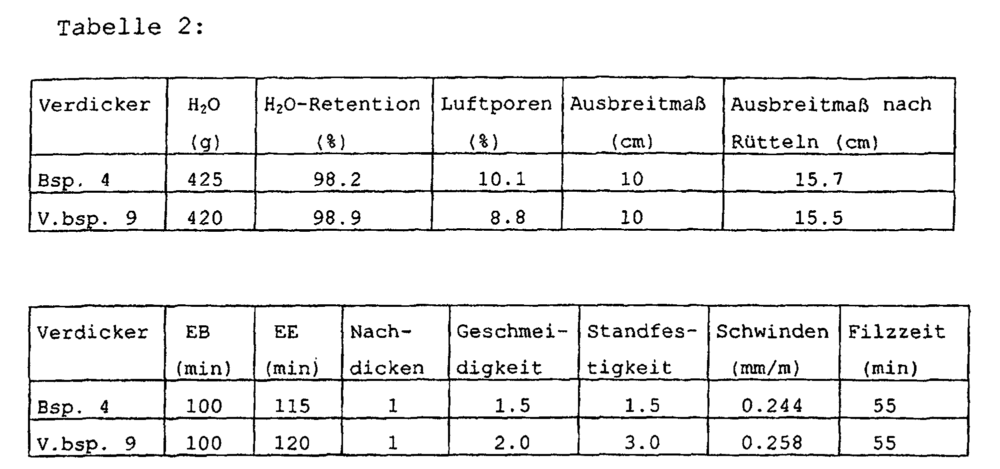

## Patentansprüche

1. Verwendung von Mischpolymerisaten auf der Basis von vollverseiften oder teilverseiften Vinylalkohol-Mischpolymerisaten, erhältlich durch Verseifung von Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁- bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen, und gegebenenfalls Hilfsmonomere aus der Gruppe umfassend ethylenisch ungesättigte Mono- und Dicarbonsäuren, ethylenisch ungesättigte Carbonsäureamide und -nitrile, ethylenisch ungesättigte Carbonsäureanhydride, mit einem Molekulargewicht Mw > 100000, und in Form deren wässrigen Lösung oder in Pulverform, als Verdickungsmittel.

2. Verwendung nach Anspruch 1, **dadurch gekennzeichnet, daß** neben Vinylacetat-Einheiten noch Comonomereinheiten enthalten sind, welche sich von einem oder mehreren Comonomeren ableiten aus der Gruppe umfassend Isopropenylacetat, Vinylester von alpha-verzweigten Carbonsäuren mit 9 bis 11 C-Atomen, Acrylsäure- und Methacrylsäureester von C₁- bis C₁₀-Alkoholen.

3. Verwendung nach Anspruch 1 oder 2, **dadurch gekennzeichnet, daß** der Hydrolysegrad der teilverseiften oder vollverseiften Vinylalkohol-Mischpolymerisate 75 bis 100 Mol-% beträgt.

4. Verwendung nach Anspruch 1 oder 2, **dadurch gekennzeichnet, daß** der Anteil der genannten Comonomer-Einheiten jeweils 0.3 bis 15 Gew.-% beträgt, jeweils bezogen auf das Gesamtgewicht des Vinylalkohol-Mischpolymerisats.

5. Verwendung nach Anspruch 1 bis 4, auf der Basis von Vinylalkohol-Mischpolymerisaten mit jeweils 0.3 bis 15 Gew.-% Isopropenylacetat oder Vinylester von alpha-verzweigten Carbonsäuren mit 9 bis 11 C-Atomen oder Methyl-, Ethyl-, Butylacrylat, 2-Ethylhexylacrylat und 2-Ethylhexylmethacrylat,
oder von Vinylalkohol-Mischpolymerisaten mit 0.3 bis 15 Gew.-% Isopropenylacetat-Einheiten und 0.3 bis 15 Gew.-% Vinylester von alpha-verzweigten Carbonsäuren mit 9 bis 11 C-Atomen,
oder von Vinylalkohol-Mischpolymerisaten mit 0.5 bis 6 Gew.-% Isopropenylacetat und 0.5 bis 6 Gew.-% Vinylester von alpha-verzweigten Carbonsäuren mit 10 C-Atomen, und 0.5 bis 6 Gew.-% Methylacrylat,
oder von Vinylalkohol-Mischpolymerisaten mit 0.5 bis 6 Gew.-% Isopropenylacetat und 0.5 bis 6 Gew.-% 2-Ethylhexylmethacrylat, und 0.5 bis 6 Gew.-% Methylacrylat.

6. Verwendung gemäß Anspruch 1 bis 5, **dadurch gekennzeichnet, daß** die Herstellung mittels radikalisch initiierter Substanz-, Lösungs-, Suspensions- oder Emulsionspolymerisation, bei einer Temperatur von 5°C bis 90°C, durch Copolymerisation von Vinylacetat mit einem oder mehreren Comonomeren aus der Gruppe umfassend 1-Alkylvinylester mit C₁- bis C₅-Alkylrest von C₁-bis C₅-Carbonsäuren, Vinylester von alpha-verzweigten Carbonsäuren mit 5 bis 12 C-Atomen, Acrylsäure- und Methacrylsäureester von C₁- bis C₁₈-Alkoholen erfolgt, und das dabei erhaltene Vinylacetat-Mischpolymerisat in einem nachfolgenden Hydrolyseschritt verseift wird.

7. Verwendung der Verdickungsmittel gemäß Anspruch 1 bis 5 als wässrige Lösung, oder in Pulverform, oder als Additiv in wässrigen Polymerdispersionen oder in Wasser redispergierbaren Polymerpulvern in einer Menge von 0.01 bis 20 Gew.-% Verdickungsmittel (fest), bezogen auf das Gesamtgewicht der zu verdickenden Zusammensetzung, in Kosmetika, im pharmazeutischen Bereich, in wasserbasierenden Siliconemulsionen, in Siliconölen, in Beschichtungsmittel-Zusammensetzungen, in Klebstoff-Zusammensetzungen, und in Bauanwendungen.

8. Verwendung nach Anspruch 1 bis 7 in Bauanwendungen mit hydraulisch abbindenden und nicht hydraulisch abbindenden Zusammensetzungen.

9. Verwendung nach Anspruch 8 in zementären Bauklebern, zementären Trockenmörteln, zementären Verlaufsmassen, zementären Putzen, zementären Vollwärmeschutzkleber, zementären Dichtungsschlämmen.

10. Verwendung nach Anspruch 8 in zementfreien Spachtelmassen, Putzen, Fliesenklebern und Vollwärmeschutzklebern.

11. Verwendung nach Anspruch 10 in gipshaltigen Zusammensetzungen.

12. Verwendung nach Anspruch 11 in Gipsputzen und Gipsspachtelmassen.

13. Verwendung nach Anspruch 1 bis 12 im Gemisch mit in Wasser redispergierbaren Redispersionspulvern.

## Claims

1. Use of copolymers based on fully or partially hydrolysed vinyl alcohol copolymers obtainable by hydrolysing vinyl acetate copolymers which, besides vinyl acetate units, also contain comonomer units which derive from one or more comonomers selected from the group consisting of 1-alkylvinyl esters, with a C₁-C₅-alkyl radical, of C₁-C₅ carboxylic acids, allyl esters, vinyl esters of alpha-branched carboxylic acids having from 5 to 12 carbon atoms, and C₁-C₁₈-alkyl (meth)acrylates, and, where appropriate, auxiliary monomers selected from the group consisting of ethylenically unsaturated mono- and dicarboxylic acids, ethylenically unsaturated carboxamides, ethylenically unsaturated carbonitriles, and ethylenically unsaturated carboxylic anhydrides, with a molecular weight Mw > 100 000, and in the form of their aqueous solution or in powder form, as thickeners.

2. Use according to Claim 1, **characterized in that**, besides vinyl acetate units, there are also comonomer units present which derive from one or more comonomers selected from the group consisting of isopropenyl acetate, vinyl esters of alpha-branched carboxylic acids having from 9 to 11 carbon atoms, and C₁-C₁₀-alkyl (meth)acrylates.

3. Use according to Claim 1 or 2, **characterized in that** the degree of hydrolysis of the partially or fully hydrolysed vinyl alcohol copolymers is from 75 to 100 mol%.

4. Use according to Claim 1 or 2, **characterized in that** the proportion of the comonomer units mentioned is in each case from 0.3 to 15% by weight, based in each case on the total weight of the vinyl alcohol copolymer.

5. Use according to any of Claims 1 to 4, based on vinyl alcohol copolymers in each case having from 0.3 to 15% by weight of isopropenyl acetate, or vinyl esters of alpha-branched carboxylic acids having from 9 to 11 carbon atoms, or methyl, ethyl, butyl or 2-ethylhexyl acrylate, or 2-ethylhexyl methacrylate,
or on vinyl alcohol copolymers having from 0.3 to 15% by weight of isopropenyl acetate units and from 0.3 to 15% by weight of vinyl esters of alpha-branched carboxylic acids having from 9 to 11 carbon atoms,
or on vinyl alcohol copolymers having from 0.5 to 6% by weight of isopropenyl acetate and from 0.5 to 6% by weight of vinyl esters of alpha-branched carboxylic acids having 10 carbon atoms, and from 0.5 to 6% by weight of methyl acrylate,
or on vinyl alcohol copolymers having from 0.5 to 6% by weight of isopropenyl acetate and from 0.5 to 6% by weight of 2-ethylhexyl methacrylate, and from 0.5 to 6% by weight of methyl acrylate.

6. Use according to any of Claims 1 to 5, **characterized in that** the preparation takes place by free-radical-initiated bulk, solution, suspension, or emulsion polymerization at a temperature of from 5 to 90°C, by copolymerizing vinyl acetate with one or more comonomers selected from the group consisting of 1-alkylvinyl esters, with a C₁-C₅-alkyl radical, of C₁-C₅-carboxylic acids, vinyl esters of alpha-branched carboxylic acids having from 5 to 12 carbon atoms, and C₁-C₁₈-alkyl (meth)acrylates, and the resultant vinyl acetate copolymer is hydrolysed in a subsequent hydrolysis step.

7. Use of the thickeners according to any of Claims 1 to 5 as an aqueous solution or in powder form, or as an additive in aqueous polymer dispersions, or in water-redispersible polymer powders, in amounts of from 0.01 to 20% by weight of thickener (solid), based on the total weight of the composition to be thickened, in cosmetics, in the pharmaceutical sector, in water-based silicone emulsions, in silicone oils, in coating compositions, in adhesive compositions, or in construction applications.

8. Use according to any of Claims 1 to 7 in construction applications with hydraulically setting or non-hydraulically setting compositions.

9. Use according to Claim 8 in cement-type construction adhesives, cement-type dry mortars, cement-type flowable compositions, cement-type renders, cement-type exterior insulation system adhesives, or in cement-type non-shrink grouts.

10. Use according to Claim 8 in cement-free troweling compositions, in renders, in tile adhesives, or in exterior insulation system adhesives.

11. Use according to Claim 10 in gypsum-containing compositions.

12. Use according to Claim 11 in gypsum renders or in gypsum troweling compositions.

13. The use as claimed in any of Claims 1 to 12 in a mixture with water-redispersible redispersion powders.

## Revendications

1. Utilisation de produits de polymérisation mixtes à base de produits de polymérisation mixtes d'alcool vinylique complètement ou partiellement saponifiés, que l'on peut obtenir, avec un poids moléculaire Mw > 100 000, et sous la forme de leurs solutions aqueuses ou sous forme de poudre, en tant qu'agent épaississant, par saponification de produits de polymérisation mixtes d'acétate de vinyle, qui contiennent, outre les unités d'acétate de vinyle, encore des unités de comonomères qui dérivent d'un ou de plusieurs comonomères provenant du groupe comprenant des esters 1-alkylvinyliques avec un radical alkyle en C₁-C₅ d'acides carboxyliques C₁ à C₅, d'esters allyliques, d'esters vinyliques d'acides carboxyliques ramifiés en alpha, ayant de 5 à 12 atomes de C, d'esters de l'acide acrylique et de l'acide méthacrylique d'alcools C₁ à C₁₈ et, le cas échéant, de monomères auxiliaires provenant du groupe comprenant les acides mono- et dicarboxyliques à insaturation éthylénique, les amides et les nitriles d'acides carboxyliques à insaturation éthylénique, les anhydrides d'acides carboxyliques à insaturation éthylénique.

2. Utilisation selon la revendication 1, **caractérisée en ce que** sont contenues, outre les unités d'acétate de vinyle, encore des unités de comonomères, qui dérivent d'un ou de plusieurs comonomères provenant du groupe comprenant l'acétate d'isopropényle, les esters vinyliques d'acides carboxyliques ramifiés en alpha ayant de 9 à 11 atomes de C, les esters de l'acide acrylique et de l'acide méthacrylique d'alcools C₁ à C₁₀.

3. Utilisation selon la revendication 1 ou 2, **caractérisée en ce que** le degré d'hydrolyse des produits de polymérisation mixtes d'alcool vinylique, partiellement ou complètement saponifiés, est de 75 à 100 % en moles.

4. Utilisation selon la revendication 1 ou 2, **caractérisée en ce que** la proportion des unités de comonomères cités est, à chaque fois, de 0,3 à 15 % en poids, à chaque fois par rapport au poids total du produit de polymérisation mixte d'alcool vinylique.

5. Utilisation selon les revendications 1 à 4, à base de produits de polymérisation mixtes d'alcool vinylique ayant, à chaque fois, 0,3 à 15 % en poids d'acétate d'isopropényle ou d'esters vinyliques d'acides carboxyliques ramifiés en alpha ayant de 9 à 11 atomes de C ou d'acrylate de méthyle, d'acrylate d'éthyle, d'acrylate de butyle ou d'acrylate de 2-éthylhexyle et de méthacrylate de 2-éthylhexyle ou de produits de polymérisation mixtes d'alcool vinylique ayant de 0,3 à 15 % en poids d'unités d'acétate d'isopropényle et de 0,3 à 15 % en poids d'esters vinyliques d'acides carboxyliques ramifiés en alpha ayant de 9 à 11 atomes de C, ou de produits de polymérisation mixtes d'alcool vinylique ayant de 0,5 à 6 % en poids d'acétate d'isopropényle et de 0,5 à 6 % en poids d'esters vinyliques d'acides carboxyliques ramifiés en alpha ayant 10 atomes de C et de 0,5 à 6 % en poids d'acrylate de méthyle ou de produits de polymérisation mixtes d'alcool vinylique ayant de 0,5 à 6 % en poids d'acétate d'isopropényle et de 0,5 à 6 % en poids de méthacrylate de 2-éthylhexyle et de 0,5 à 6 % en poids d'acrylate de méthyle.

6. Utilisation selon les revendications 1 à 5, **caractérisée en ce que** la fabrication se fait par l'intermédiaire d'une polymérisation en émulsion, en suspension, en solution ou en substance à initiation par radicaux, à une température de 5°C à 90°C, par copolymérisation d'acétate de vinyle avec un ou plusieurs comonomères provenant du groupe comprenant des esters 1-alkylvinyliques avec un radical alkyle en C₁-C₅ d'acides carboxyliques C₁ à C₅, d'esters vinyliques d'acides carboxyliques ramifiés en alpha, ayant de 5 à 12 atomes de C, d'esters de l'acide acrylique et de l'acide méthacrylique d'alcools C₁ à C₁₈ et **en ce que** le produit de polymérisation mixte d'acétate de vinyle obtenu en l'occurrence est saponifié dans une étape d'hydrolyse subséquente.

7. Utilisation de l'agent épaississant selon les revendications 1 à 5, en tant que solution aqueuse ou sous forme de poudre ou en tant qu'additif dans des dispersions polymères aqueuses ou dans des poudres polymères redispersibles dans l'eau, dans une quantité de 0,01 à 20 % en poids d'agent épaississant (à l'état solide), par rapport au poids total de la composition à épaissir, dans des produits cosmétiques, dans le domaine pharmaceutique, dans des émulsions de silicones à base d'eau, dans des huiles de silicones, dans des compositions de revêtement, dans des compositions d'adhésifs et dans des applications de construction.

8. Utilisation de les revendications 1 à 7, dans des applications de construction avec des compositions à liaison hydraulique et à liaison non hydraulique.

9. Utilisation selon la revendication 8, dans des adhésifs de construction à base de ciment, des mortiers secs à base de ciment, des produits nivelants à base de ciment, des crépis à base de ciment, des colles calorifuges à base de ciment, des suspensions d'étanchéité à base de ciment.

10. Utilisation selon la revendication 8 dans des mastics, des crépis, des colles pour carreaux et des colles calorifuges à base de ciment.

11. Utilisation selon la revendication 10 dans des compositions contenant du gypse.

12. Utilisation selon la revendication 11 dans des crépis de plâtre et des mastics de gypse.

13. Utilisation selon les revendications 1 à 12 en mélange à des poudres de redispersion redispersibles dans l'eau.
